# EUROPÄISCHE PATENTSCHRIFT

(11) **EP 2 053 249 B1**
(45) Veröffentlichungstag und Bekanntmachung des Hinweises auf die Patenterteilung: **18.07.2018**
(21) Anmeldenummer: 08016948.5
(22) Anmeldetag: 26.09.2008
(51) Int. Cl.: F04D 17/16, F04D 19/04, F04D 27/02

(54) **Anordnung mit Vakuumpumpe und Verfahren**
Assembly with vacuum pump and method
Agencement doté d'une pompe à vide et procédé

(30) Priorität: 25.10.2007 DE 102007051045
(43) Veröffentlichungstag der Anmeldung: 29.04.2009
(73) Patentinhaber: PFEIFFER VACUUM GMBH, 35614 Asslar (DE)
(72) Erfinder: Böttcher, Jochen, 35394 Giessen (DE)
(74) Vertreter: Manitz Finsterwald Patentanwälte PartmbB

(56) Entgegenhaltungen:
- EP-A1- 0 695 873
- DE-A1- 2 034 327
- DE-A1- 10 148 251
- JP-A- H03 182 698
- JP-A- S62 191 696
- US-A- 5 443 368

## Beschreibung

Die Erfindung betrifft ein Verfahren nach dem Oberbegriff des ersten Anspruchs und eine Anordnung nach dem Oberbegriff des funften Anspruchs.

Vakuumpumpen mit schnelldrehenden Rotoren haben sich in vielen Anwendungsfällen zur Erzeugung von Hochvakuum durchgesetzt. Insbesondere sind Turbomolekularvakuumpumpen sehr erfolgreich. Die Rotoren dieser meist als Turbopumpen bezeichneten Maschinen werden mit Drehzahlen von einigen 10.000 Umdrehungen in der Minute betrieben. Viele dieser Turbopumpen laufen in Prozessen, in denen sich die Vakuumverhältnisse zyklisch ändern. Zu diesem Zyklus gehört meist auch das Belüften des Systems. Bei der im Folgenden betrachteten Art des Belüftens strömt Gas durch die Vakuumpumpe in den Rezipienten ein, wobei gleichzeitig die Drehzahl des Rotors abgesenkt oder dieser zum Stillstand gebracht wird. Man spricht von einem Flutvorgang. Der Gasstrom während des Flutvorgangs ist mit Bedacht zu wählen und darf keinesfalls zu hoch eingestellt werden, da durch ihn enorme Kräfte entstehen, die auf den Rotor einwirken. Ein niedriger Gaststrom bedeutet jedoch eine lange Dauer für das Belüften. Andererseits soll das Belüften oftmals möglichst schnell geschehen, damit die Zykluszeit verkürzt werden kann.

Diesen widersprüchlichen Anforderungen wird im Stand der Technik mit verschiedenen Maßnahmen begegnet.

Die DE-OS 40 22 523 schlägt vor, eine Steuervorrichtung vorzusehen, die während des Flutens die auf den Rotor wirkenden Kräfte misst und davon abhängig ein Flutventil im Gaszufluss steuert. Die Messung erfolgt mit Hilfe eines Sensors oder durch Betrachten der notwendigen Kräfte in einem Magnetlager.

Die EP-A 1 739 308 greift diesen Gedanken auf und verallgemeinert ihn dahingehend, dass die Steuerung einen allgemeinen Betriebsparameter der Vakuumpumpe überwacht und das Flutventil davon abhängig steuert.

Bei der Umsetzung dieser Lösungen stößt man auf einige Probleme. So erfordert die Messung und nachfolgende Steuerung eine schnelle Mess- und Regelungstechnik. Dies bedeutet Kosten und Grenzen in der erreichbaren Zykluszeit, da Mess- und Steuervorgänge Zeit benötigen. Zudem müssen im Regelkreis Maßnahmen getroffen werden, die ein Überschreiten von Sicherheitsgrenzen zuverlässig verhindern.

Die Zykluszeit ist nur eine der Bedingungen, die für das Fluten der Vakuumpumpe und des an ihr angeschlossenen Rezipienten von Bedeutung ist. Andere Bedingungen sind, dass das Fluten die Aufbauten und Abläufe im Inneren des Rezipienten nicht stören sollte. Hier sind Einschränkungen durch den in ihr auftretenden Gasstrom denkbar. Zum anderen ist die Vakuumpumpe selbst Einschränkungen bei der Drehzahl des Rotors unterworfen. Gewisse Drehzahlen führen zu Resonanzeffekten, die eine Verkürzung der Lebensdauer, beispielsweise durch Schädigung der Lager, nach sich ziehen können.

Die JP H03 182698 A offenbart ein Verfahren gemäß dem Oberbegriff des Anspruchs 1 und eine Anordnung gemäß dem Oberbegriff des Anspruchs 6. Weiterer Stand der Technik ist aus US 5 443 368 A und EP 0 695 873 A1 bekannt.

Aus den vorgenannten Nachteilen ergibt sich daher die Aufgabe, das Fluten einer Vakuumpumpe im Hinblick auf den Prozess zu verbessern, in dem sie verwendet wird.

Diese Aufgabe wird gelöst durch ein Verfahren nach Anspruch 1 und eine Anordnung nach Anspruch.

Die weiteren Ansprüche geben vorteilhafte Weiterbildungen der Erfindung an.

Durch das Verfahren und die Anordnung ist es möglich, den Flutvorgang an die Gegebenheiten des Prozesses anzupassen. Das kann vorteilhaft vor Ort geschehen, das heißt dort, wo der Prozess stattfindet und die Vakuumpumpe verwendet wird. Der Benutzer der Vakuumpumpe passt selbst den Flutvorgang an seine Bedürfnisse an, indem er selbst einen Flutparameter auswählt. Er kann diesen Vorgang automatisch ablaufen lassen, in dem in einem Verfahrensschritt der günstigste Flutparameter aus der Menge der Flutparameter ausgewählt wird. Dies kann einmalig, beispielswiese nach Zusammenbau der Anlage, mehrmalig, beispielsweise als Kontrollmessung nach jedem n-ten Flutvorgang, oder vor jedem Flutvorgang geschehen. Der Betreiber der Anordnung mit einer Vakuumpumpe wird durch die Erfindung in die Lage versetzt, eine hohe Zykluszeit zu erreichen oder einen schonenden Flutvorgang auszuwählen, bei dem zumindest zu Beginn nur eine geringe Gasmenge eingelassen wird, beispielsweise um das Aufwirbeln von Stäuben zu vermeiden. Eine Weiterbildung schlägt vor, ein Ventil mit veränderbarem Leitwert als Flutventil zu benutzen, da so eine Veränderung der eingelassenen Gasmenge über die Öffnungsdauer des Ventils hinaus ermöglicht wird. Da der Flutparameter aus einem Satz von Flutparametern ausgewählt wird, kann bei Festlegen des Parametersatzes garantiert werden, dass die Bedingungen in Bezug auf die Lebensdauer der Vakuumpumpe eingehalten werden, beispielsweise durch schnelles Durchfahren von lagerbelastenden Bereichen der Drehzahl. Der Flutparameter bezeichnet diejenigen Größen, die zur Ansteuerung des Ventils benötigt werden. Im einfachsten Fall kann dies die Öffnungsdauer sein. Unter Flutparameter wird jedoch auch ein Satz von Einzelgrößen zusammengefasst, beispielsweise bei einem getakten Flutvorgang die Taktlänge und das Tastverhältnis von geschlossenem zu offenem Zustand. Weitere Größen sind denkbar. In einer vorteilhaften Weiterbildung gibt der Flutparameter einen Öffnungsverlauf des Ventils an. Er beschreibt dann den zeitlichen Verlauf des Öffnungsverhaltens, beispielsweise eine Taktung mit kurzen Öffnungszeiten zu Beginn und langen
Öffnungszeiten zum Schluss des Flutens. In einer anderen Weiterbildung wird als Betriebsgröße die Leistungsaufnahme des Motors benutzt, da diese ohnehin durch die Antriebselektronik erfasst wird. Die Verwendung anderer Betriebsgrößen ist denkbar, wie beispielsweise die ebenfalls ohnehin erfasste Drehzahl des Rotors.

Anhand eines Ausführungsbeispiels soll die Erfindung näher erläutert und weitere Vorteile aufgezeigt werden. Es zeigen:
- Fig. 1:: Anordnung mit einer Vakuumpumpe
- Fig. 2:: Beispielhafter Verlauf einiger Größen bei einem Flutvorgang
- Fig. 3:: Zeitlicher Verlauf der Drehzahl bei Ausführen des ersten Schrittes.
- Fig. 4:: Zeitlicher Verlauf der Leistungsaufnahme des Antriebs bei Ausführen des ersten Schrittes.
- Fig. 5:: Erstes Beispiel für den durch einen ersten Flutparameter beschriebenen Öffnungsverlauf des Ventils.
- Fig. 6:: Zweites Beispiel für den durch einen zweiten Flutparameter beschriebenen Öffnungsverlauf des Ventils.
- Fig. 7:: Drittes Beispiel für den durch einen dritten Flutparameter beschriebenen Öffnungsverlauf des Ventils.
- Fig. 8:: Viertes Beispiel für den durch einen dritten Flutparameter beschriebenen Öffnungsverlauf des Ventils.

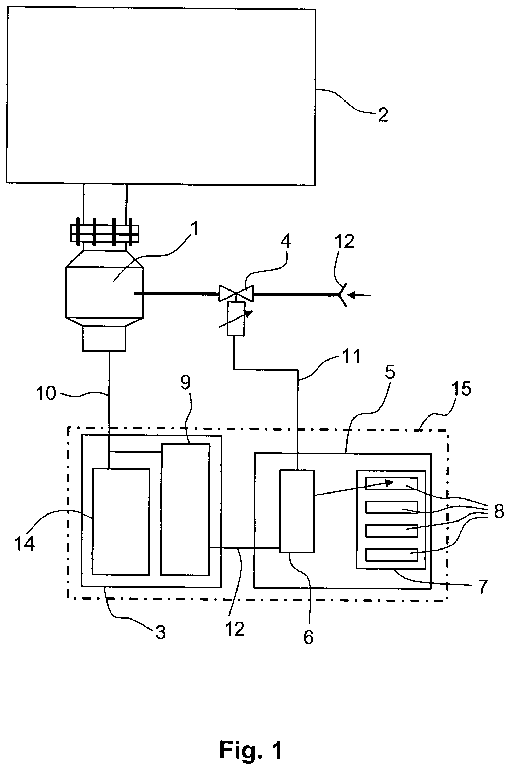

Eine Anordnung mit Vakuumpumpe 1 ist in Figur 1 gezeigt. Die Vakuumpumpe ist an einen Rezipienten 2 angeschlossen und erzeugt in diesem ein Vakuum. Hierzu wird ihr vom Leistungsteil 14 einer Antriebselektronik 3 elektrische Leistung zur Verfügung gestellt. Hierzu ist eine elektrische Verbindung 10 zwischen Antriebselektronik und Vakuumpumpe vorgesehen. Für den Flutvorgang, bei dem Vakuumpumpe und Rezipient vom Arbeitsvakuum auf einen höheren Druck, beispielsweise Atmosphärendruck, gebracht werden, weist die Anordnung ein steuerbares Ventil 4 auf. Gesteuert wird der Öffnungszustand des Ventils von einer Ventilsteuerung 5, welche mit dem Ventil über eine Leitung 11 verbunden ist. Im geöffneten Zustand strömt Gas vom Gaseinlass 12 durch das Ventil in die Vakuumpumpe und durch diese in den Rezipienten. Es ist als Weiterbildung denkbar, das Ventil so zugestalten, dass die Menge an Gas durch einen veränderbaren Leitwert geändert wird. In einer Abwandlung ist es denkbar, das Flutventil an den Rezipienten 2 anzuschließen.

Die Ventilsteuerung weist ein Flutparameterwählmittel 6 und einen Flutparameterspeicher 7 auf. In diesem Flutparameterspeicher sind Flutparameter 8 hintergelegt. Das Flutparameterwählmittel wählt einen der Flutparameter 8 aus. Nach den Vorgaben dieses Flutparameters erfolgt dann die Steuerung des Ventils.

Das Flutparameterwählmittel kann als Wählschalter gestaltet sein, der für den Benutzer zugänglich ist. Andere Gestaltungen wie Touchscreen und ähnliches sind denkbar. Mit diesen Gestaltungen kann der Benutzer der Anordnung mit Vakuumpumpe per Hand oder fernbedient per angeschlossenem Rechner den Flutparameter wählen und dadurch den Flutvorgang an den Prozess anpassen.

Im gezeigten Beispiel steht das Flutparameterwählmittel mittels einer Leitung 12 mit einer Messbaugruppe 9 in Verbindung. Die Messbaugruppe ist derart gestaltet, dass sie eine Betriebsgröße der Vakuumpumpe, beispielsweise Leistungsaufnahme oder Drehzahl, messen kann. Das Flutparameterwählmittel ist angepasst, aufgrund des Messergebnisses den Flutparameter aus der Menge der im Flutparameterspeicher abgelegten Flutparameter auszuwählen. Auf diese Weise wird ein selbsttätiges Einstellen des besten Flutparameters durch die Anordnung ermöglicht, so dass der Benutzer keine Einstellung vornehmen muss.

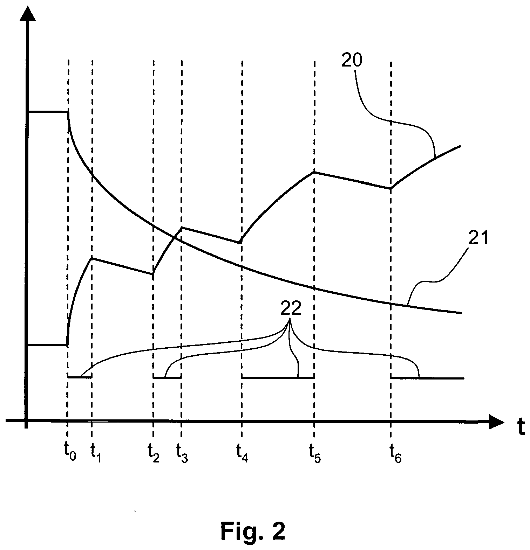

Mit den Figuren 2 bis 8 soll im Folgenden der Flutvorgang und ein Beispiel für das erfindungsgemäße Verfahren, welches mit der beschriebenen Anordnung durchgeführt werden kann, vorgestellt werden.

In Figur 2 sind der zeitliche Verlauf von Druck 20, Drehzahl 21 und Schaltzustand 22 des Ventils bei einem Flutvorgang dargestellt. Der Flutvorgang beginnt zum Zeitpunkt t₀ mit Abschalten des Motors. Gleichzeitig wird das Ventil in geöffnete Stellung gebracht und zu einem Zeitpunkt t₁ wieder geschlossen. Zwischen den Zeitpunkten t₀ und t₁ steigt daher der Druck an. Die Drehzahl fällt von einem vor dem Zeitpunkt t₀ konstanten Wert ab. Nach dem Zeitpunkt t₁, wenn das Ventil wieder geschlossen ist, sinkt der Druck ab, da das eingelassene Gas von der Pumpe abgepumpt wird. Der Drehzahlverlauf hängt von der eingelassenen Gasmenge und Rotormasse ab. Im gezeigten Beispiel sind Gasmenge und Rotormasse so bemessen, dass das Gas auch nach Schließen des Ventils zum Zeitpunkt t₁ weiterhin eine Abbremsung des Rotors bewirkt.

Dem Zeitpunkt t₀ folgt etwas später der Zeitpunkt t₂, an dem das Ventil wieder geöffnet wird. Erneut wird Gas eingelassen, so dass der Druck ansteigt. Mit Schließen des Ventils zur Zeit t₃ beginnt der Druck wieder zu fallen. Er bleibt dabei aber über dem Wert, den er zur Zeit t₁ hatte. Die Drehzahl sinkt aufgrund der Gasreibung weiter ab.

Dem Zeitpunkt t₃ folgt der Zeitpunkt t₄, an dem das Ventil erneut geöffnet wird. Wieder steigt der Druck an, während die Drehzahl weiter sinkt. Zur Zeit t₅ wird das Ventil wieder geschlossen. Die Drehzahl fällt, der Druck sinkt. Zwischen den Zeitpunkten t₅ und t₆ unterschreitet die Drehzahl eine kritische Drehzahl, so dass ab t₆ das Ventil ganz geöffnet bleiben kann. Die Drehzahl fällt nun bis zum Stillstand ab und der Druck steigt bis zu jenem Druck an, der das durch das Flutventil einströmende Gas hat, in der Regel Atmosphärendruck.

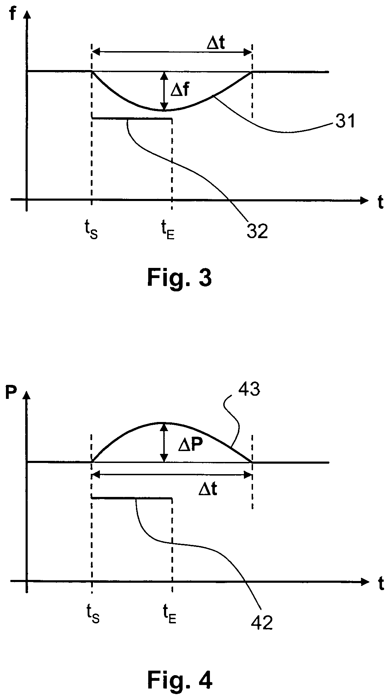

Die Figuren 3 und 4 zeigen Beispiele für den ersten Schritt, in welchem das Ventil geöffnet und bei geöffnetem Ventil eine Betriebsgröße der Antriebselektronik erfasst wird. Dieser Schritt findet vor dem eigentlichen Flutvorgang statt. In beiden Figuren bezeichnet t_{S} den Zeitpunkt, an dem das Ventil geöffnet wird, um Gas einzulassen. Zum Zeitpunkt t_{E} wird das Ventil wieder geschlossen und damit das Einlassen von Gas beendet.

Figur 3 zeigt das Beispiel, in dem die zwischen t_{S} und t_{E} eingelassene Gasmenge so gewählt ist, dass sie zu einer messbaren Absenkung der Drehzahl 31 führt. Die Drehzahl wird als eine Betriebsgröße überwacht. Der Motor wird währenddessen mit elektrischer Leistung versorgt und diese Leistung konstant gehalten. Die Absenkung beginnt mit Einlassen des Gases. Während das Ventil in geöffneter Stellung 32 ist, nimmt die Drehzahl um einen Wert Δf ab. Mit Schließen des Ventils an t_{E} steigt die Drehzahl wieder an, um nach der Zeit Δt auf den Ursprungswert anzusteigen, den sie vor dem Zeitpunkt t_{S} hatte. Drehzahlabsenkung sowie deren Dauer und Verlauf werden durch Größen wie das Rezipientenvolumen, u.a. bestimmt. Daher können Dauer, Maximalwert, Kurvenform, und Fläche unter Drehzahlkurve genutzt werden, um eine Entscheidung über einen sinnvollen Flutparameter zu treffen. Beispielsweise spricht eine starke, lang anhaltende Drehzahlabsenkung für eine Situation, in der nur langsam geflutet werden kann und große Gasmengen zu einer kritischen Belastung führen.

In Figur 4 ist ein Beispiel gezeigt, in dem die Leistungsaufnahme des Motors als Betriebsgröße überwacht wird. Durch Öffnen 42 des Ventils zwischen den Zeitpunkten t_{S} und t_{E} ergibt sich eine Leistungsaufnahme gemäß Leistungskurve 43. Durch die eingelassene Gasmenge steigt die Leistungsaufnahme um eine Wert ΔP an, während die Drehzahl auf einem konstanten Wert gehalten wird. Die Leistungsaufnahme beginnt erst mit dem Schließen des Ventils zur Zeit t_{E} zu sinken.

Leistungszunahme sowie deren Dauer und Verlauf werden durch Größen wie das Rezipientenvolumen, u.a. bestimmt. Daher können Dauer, Maximalwert, Kurvenform, und Fläche unter Leistungskurve genutzt werden, um eine Entscheidung über einen sinnvollen Flutparameter zu treffen. Beispielsweise spricht eine starke, lang anhaltende Leistungszunahme für eine Situation, in der nur langsam geflutet werden kann und große Gasmengen zu einer kritischen Belastung führen.

Nachdem im ersten Schritt eine Betriebsgröße erfasst wurde, beispielsweise gemäß der zu den Figuren 3 und 4 beschriebenen Abläufen, findet in einem nachfolgenden Schritt ein Vergleich statt. Bei diesem Vergleich wird der Messwert der Betriebsgröße oder ein daraus abgeleiteter Wert mit Referenzwerten verglichen, welche paarweise mit Flutparametern im Flutparameterspeicher abgelegt sind. Ein abgeleiteter Wert kann beispielsweise die Fläche unter der Kurve der Leistungsaufnahme sein. Abhängig von dem Ergebnis des Vergleiches von ermitteltem Wert und Referenzwert wird dann ein Flutparameter ausgewählt.

In einer Weiterbildung wird der erste Schritt vor mehr als einem Flutvorgang einer Mehrzahl von Flutvorgängen durchgeführt. In einem Prozess wird beispielsweise vor jedem fünften Flutvorgang der erste Schritt ausgeführt. Hierdurch ist gewährleistet, dass der Flutparameter auch dann optimal ist, wenn sich die Betriebsbedingungen der Vakuumanordnung zwischen den Flutvorgängen ändern.

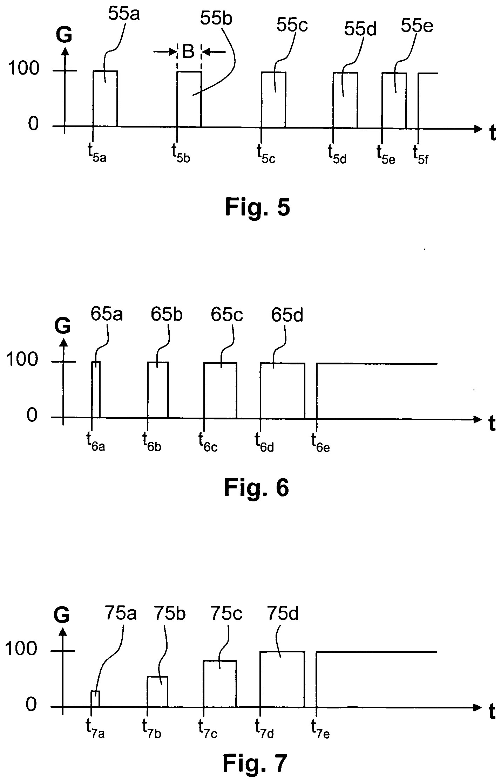

Die Figuren 5 bis 8 zeigen Flutventilöffnungsverläufe, die durch verschiedene Flutparameter beschrieben werden und daher durch das Flutparameterwählmittel ausgewählt werden können. Aufgetragen ist der Öffnungsgrad G des Flutventils über der Zeit t.

In Figur 5 beschreibt ein Flutparameter einen Flutventilöffnungsverlauf, bei dem das Flutventil während der Pulse 55a, 55b, 55c, 55d und 55e geöffnet wird. Die Öffnungsdauer B ist bei allen Pulsen gleich, ebenso beträgt der Öffnungsgrad jeweils 100 Prozent, d.h. das Flutventil ist maximal geöffnet. Die Pulse setzen zu unterschiedlichen Zeitpunkten t₅ₐ, t_{5b}, t_{5c}, t_{5d} und t₅ₑ ein, wobei die Abstände zwischen den Zeitpunkten in der genannten Reihenfolge abnimmt. Zum Zeitpunkt t_{5f} wird das Flutventil voll geöffnet. Es kann bis zum Stillstand der Vakuumpumpe in diesem Zustand bleiben oder schon vorher wieder, beispielsweise bei Unterschreiten eines Drehzahlschwellwertes, geschlossen werden.

Der Öffnungsverlauf des Flutventils gemäß Figur 6 umfasst wiederum eine Vielzahl von Pulsen 65a, 65b, 65c und 65d bei denen der Öffnungsgrad des Flutventils 100 Prozent beträgt, das Flutventil also voll geöffnet wird. Die Pulse setzen zu den Zeitpunkten t₆ₐ, t_{6b}, t_{6c} und t_{6d} ein, wobei der Abstand zwischen den Zeitpunkten konstant ist. Dafür nimmt die Öffnungsdauer vom ersten zum letzten Zeitpunkt zu, d.h. bei jedem nachfolgenden Puls ist das Flutventil länger geöffnet. Zum Zeitpunkt t₆ₑ wird das Flutventil voll geöffnet. Es kann bis zum Stillstand der Vakuumpumpe in diesem Zustand bleiben oder schon vorher wieder, beispielsweise bei Unterschreiten eines Drehzahlschwellwertes, geschlossen werden.

Der Öffnungsverlauf des Flutventils gemäß Figur 7 weist Pulse 75a, 75b, 75c und 75d auf, bei denen der Öffnungsgrad des Flutentils in der genannten Reihenfolge ansteigt. Im ersten Puls 75a ist das Flutventil nur zu einem geringen Prozentsatz, beispielsweise 25, geöffnet. Beim letzten Puls 75d wird der volle Öffnungsgrad von 100 Prozent erreicht. Von Puls 75a zu Puls 75d nimmt zudem die Öffnungsdauer zu, während die Zeitpunkte t₇ₐ, t_{7b}, t_{7c} und t_{7d} der Öffnung des Flutventils gleichmäßig beabstandet sind. Zum Zeitpunkt t₇ₑ wird das Flutventil voll geöffnet. Es kann bis zum Stillstand der Vakuumpumpe in diesem Zustand bleiben oder schon vorher wieder, beispielsweise bei Unterschreiten eines Drehzahlschwellwertes, geschlossen werden.

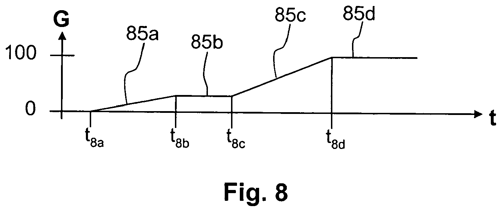

Der Öffnungsverlauf der Flutventils gemäß Figur 8 schließlich weist eine Zunahme der Öffnung des Öffnungsgrades des Flutventils auf. Mit dem Zeitpunkt t₈ₐ beginnt der Flutvorgang, indem der Öffnungsgrad des Flutventils kontinuierlich bis zum Zeitpunkt t_{8b} gesteigert wird. Dadurch ergibt sich ein rampenförmiger Verlauf 85a des Öffnungsgrades. Zwischen den Zeitpunkten t_{8b} und t_{8c} bleibt der Öffnungsgrad unverändert, der Verlauf ist eine Konstante 85b. Zwischen den Zeitpunkten t_{8c} und t_{8d} wird der Öffnungsgrad des Flutventils wieder kontinuierlich gesteigert, so dass sich wiederum ein rampenfömiger Verlauf 85c ergibt. Ab dem Zeitpunkt t_{8d} bleibt das Flutventil schließlich geöffnet. Der Verlauf folgt wiederum einer Konstanten 85d. Das Flutventil bleibt ab jetzt bis zum Stillstand der Vakuumpumpe oder bis zu einer vordefinierten Zeit beziehungsweise Drehzahl geöffnet. Dieser Öffnungsverlauf ist dadurch geprägt, dass es keine Pulse gibt sondern das Flutventil immer wenigstens teilweise geöffnet ist. Abwandlungen dieses Beispiels sind denkbar, beispielsweise die Überlagerung einer Rampe mit einer Sinuskurve.

Diese vier Beispiele zeigen Öffnungsverläufe auf. Weitere Öffnungsverläufe sind für den Fachmann aus ihnen ersichtlich, beispielsweise durch Verändern der Zahl der Pulse, Einfügen von Pausen, Verändern des Durchflussgrades G und durch gleichzeitiges Anwenden der verschiedenen Maßnahmen. Alle diese Öffnungsverläufe sind unter Flutparametern im Flutparameterspeicher abgelegt.

## Patentansprüche

1. Verfahren zum Betrieb einer Anordnung, welche eine Vakuumpumpe (1) mit schnelldrehendem Rotor, eine Antriebselektronik (3), ein Ventil (4) und eine Ventilsteuerung (5) umfasst, wobei vor einem Flutvorgang in einem Wählschritt ein Flutparameter (8) aus einer Menge von Flutparametern ausgewählt wird, wobei vor dem Wählschritt in einem ersten Schritt das Ventil (4) geöffnet und bei geöffnetem Ventil eine Betriebsgröße der Antriebselektronik (3) erfasst wird, wobei der erste Schritt mehrmals durchgeführt wird, und wobei nach dem ersten Schritt in einem weiteren Schritt der erfasste Wert der Betriebsgröße mit in einem Flutparameterspeicher (7) paarweise mit Flutparametern (8) abgelegten Referenzwerten verglichen und im Wählschritt ein Flutparameter (8) abhängig vom Ergebnis des Vergleichs ausgewählt wird.

2. Verfahren nach Anspruch 1, **dadurch gekennzeichnet, dass** der erste Schritt durchgeführt wird, während die Antriebselektronik (3) einen Motor der Vakuumpumpe mit elektrischer Leistung versorgt.

3. Verfahren nach einem der Ansprüche 1 bis 2, **dadurch gekennzeichnet, dass** ein Flutparameter (8) den Öffnungsverlauf des Ventils beinhaltet.

4. Verfahren nach einem der Ansprüche 1 bis 3, **dadurch gekennzeichnet, dass** die Betriebsgröße eines von Leistungsaufnahme des Motors und Drehzahl des Rotors ist.

5. Anordnung zur Ausführung eines Verfahrens nach einem der vorhergehenden Ansprüche, umfassend eine Vakuumpumpe (1) mit schnelldrehendem Rotor und Motor, eine Antriebselektronik (3) zur Ansteuerung des Motors, ein Ventil (4) und eine Ventilsteuerung (5), wobei die Anordnung einen Flutparameterspeicher (7) und ein Flutparameterwählmittel (6) aufweist, **dadurch gekennzeichnet, dass** ein Flutparameter (8) den Öffnungsverlauf des Ventils (4) beinhaltet und/oder das Ventil (4) einen veränderbaren Leitwert aufweist.

## Claims

1. A method of operating an arrangement which comprises a vacuum pump (1) having a fast-rotating rotor; drive electronics (3); a valve (4); and a valve control (5), wherein a flood parameter (8) is selected from a set of flood parameters in a selection step before a flooding procedure;
wherein the valve (4) is opened and, with the valve open, an operating parameter of the drive electronics (3) is detected in a first step before the selection step;
wherein the first step is carried out a multiple of times; and wherein the detected value of the operating parameter is compared with reference values which are stored pair-wise with flood parameters (8) in a flood parameter memory (7) in a further step after the first step and a flood parameter (8) is selected in dependence on the result of the comparison in the selection step.

2. A method in accordance with claim 1,
**characterized in that**
the first step is carried out while the drive electronics (3) supply electrical power to a motor of the vacuum pump.

3. A method in accordance with one of the claims 1 to 2,
**characterized in that**
a flood parameter (8) includes the opening progression of the valve.

4. A method in accordance with any one of the claims 1 to 3,
**characterized in that**
the operating parameter is one of the operating parameters power consumption of the motor and rotational speed of the rotor.

5. An arrangement for performing a method in accordance with any one of the preceding claims, comprising a vacuum pump (1) having a fast-rotating rotor and a motor; drive electronics (3) for controlling the motor; a valve (4); and a valve control (5), wherein the arrangement has a flood parameter memory (7) and a flood parameter selection means (6),
**characterized in that**
a flood parameter (8) includes the opening progression of the valve (4); and/or **in that** the valve (4) has a variable admittance.

## Revendications

1. Procédé pour faire fonctionner un agencement qui comprend une pompe à vide (1) à rotor tournant rapidement, une électronique d'entraînement (3), une valve (4) et une commande de valve (5),
dans lequel
préalablement à une opération de remplissage, un paramètre de remplissage (8) est sélectionné parmi une multitude de paramètres de remplissage dans une étape de sélection,
préalablement à l'étape de sélection, la valve (4) est ouverte dans une première étape, et
la valve étant ouverte, une grandeur de fonctionnement de l'électronique d'entraînement (3) est détectée,
la première étape est mise en oeuvre plusieurs fois, et
après la première étape, dans une autre étape, la valeur détectée de la grandeur de fonctionnement est comparée à des valeurs de référence mises en mémoire par paire avec des paramètres de remplissage dans une mémoire de paramètres de remplissage (7), et
dans l'étape de sélection, un paramètre de remplissage (8) est sélectionné en fonction du résultat de la comparaison.

2. Procédé selon la revendication 1,
**caractérisé en ce que**
la première étape est mise en oeuvre pendant que l'électronique d'entraînement (3) alimente en puissance électrique un moteur de la pompe à vide.

3. Procédé selon l'une des revendications 1 à 2,
**caractérisé en ce que**
un paramètre de remplissage (8) inclut l'évolution de l'ouverture de la valve.

4. Procédé selon l'une des revendications 1 à 3,
**caractérisé en ce que**
la grandeur de fonctionnement est l'une parmi la puissance absorbée par le moteur et la vitesse de rotation du rotor.

5. Agencement pour mettre en oeuvre un procédé selon l'une des revendications précédentes,
comportant une pompe à vide (1) à rotor tournant rapidement et à moteur, une électronique d'entraînement (3) pour piloter le moteur, une valve (4) et une commande de valve (5),
l'agencement comprenant une mémoire de paramètres de remplissage (7) et un moyen de sélection de paramètres de remplissage (6),
**caractérisé en ce que**
un paramètre de remplissage (8) inclut l'évolution de l'ouverture de la valve (4) et/ou la valve (4) présente une conductance variable.
